# EUROPÄISCHE PATENTSCHRIFT

(11) **EP 1 601 811 B1**
(45) Veröffentlichungstag und Bekanntmachung des Hinweises auf die Patenterteilung: **05.12.2007**
(21) Anmeldenummer: 04711337.8
(22) Anmeldetag: 16.02.2004
(51) Int. Cl.: C23C 4/12, C23C 4/06, F16C 33/12

(54) **VERFAHREN ZUR HERSTELLUNG EINER GLEITFLÄCHE**
METHOD FOR PRODUCING A SLIDING SURFACE
PROCEDE DE PRODUCTION D'UNE SURFACE DE GLISSEMENT

(30) Priorität: 27.02.2003 DE 10308422
(43) Veröffentlichungstag der Anmeldung: 07.12.2005
(73) Patentinhaber: DaimlerChrysler AG, 70327 Stuttgart (DE)
(72) Erfinder: HEUBERGER, Axel, 72218 Wildberg (DE); IZQUIERDO, Patrick, 89075 Ulm (DE); SAGEL, Alexander, Dr., 74821 Mosbach (DE); SCHMID, Jörn, 75323 Bad Wildbach (DE); WANKE, Christian, 73760 Ostfildern (DE)
(86) Internationale Anmeldenummer: PCT/DE2004/000282
(87) Internationale Veröffentlichungsnummer: WO 2004/076708

(56) Entgegenhaltungen:
- DE-A- 10 054 015
- DE-A- 19 549 403
- US-A- 6 095 107
- LEVCHENKO A A ET AL: "STRUCTURE AND PROPERTIES OF ARC SPRAYED, STEEL-MOLYBDENUM COATINGS" STEEL IN THE USSR, METALS SOCIETY. LONDON, GB, Bd. 17, Nr. 3, 1. März 1987 (1987-03-01), Seiten 148-150, XP002025365

## Beschreibung

Die Erfindung bezieht sich auf das Verfahren zum Herstellen einer zylinderförmigen Gleitfläche mit einer Lagerachse durch Lichtbogenspritzen von Werkstoffpartikeln einer Fe-Basislegierung.

Es ist bereits ein Verfahren zum Herstellen einer Gleitfläche aus der DE 195 49 403 A1 bekannt. Die Gleitfläche wird durch thermisches Spritzgießen einer Beschichtung aus Stahl mit Molybdän hergestellt. Dabei wird eine Mischung aus 20-60% Molybdänpulver und 80-40% Stahlpulver zur Bildung der die Gleitfläche aufweisenden Beschichtung auf die Aluminiumlegierung gespritzt. Ein ähnliches Verfahren zum Herstellen einer Gleitfläche sowie eine Gleitfläche sind aus der US 6 095 107 A und aus der DE 100 54 015 A1 bekannt. Eigenschaften von Eisenlegierungen, die mit Lichtbogenspritzen aufgebracht werden, werden offenbart in [Levchenko et al.; "Structure and properties of arc sprayed steel-molybdenum coatings"; STEEL in the USSR, Metals Society, London, GB, Bd. 17, Nr. 3, 1. März 1987].

Der Erfindung liegt die Aufgabe zugrunde, eine Gleitfläche derart auszubilden und aufzubauen, dass eine für den Druckaufbau vorteilhafte Rauhigkeitsverteilung vorliegt.

Gelöst wird die Aufgabe erfindungsgemäß dadurch, dass die Gleitfläche durch ein rotierendes Spritzwerkzeug aufgebracht wird und die Gefügestruktur der Gleitfläche mit Bezug zur Lagerachse in Umfangsrichtung oder maximal um 45° von der Umfangsrichtung abweichend ausgerichtet wird. Hierdurch wird eine transversale Orientierung der Rauhigkeiten der Gleitfläche geschaffen, welche sich vorteilhaft auf die hydrodynamische Druckausbildung auswirkt.

Hierzu ist es vorteilhaft, dass zum Aufspritzen 95 bis 100% aller Werkstoffpartikel aufgeschmolzen sind und nach dem Aufspritzen Ausnehmungen oder Tälerstrukturen in der Gleitfläche und/oder auf der Oberfläche durch Feindrehen erzeugt werden. Das Lichtbogenspritzverfahren wird derart gesteuert, dass alle Werkstoffpartikel aufgeschmolzen werden. Beim Feindrehen werden aufgrund des hohen Aufschmelzungsgrades der Werkstoffpartikel Tälerstrukturen in Form von Ausnehmungen erzeugt und unkontrollierte Schichtausbrüche von nicht aufgeschmolzenen Werkstoffpartikeln vermieden.

Beim Aufspritzen der Gleitfläche wird somit eine definierte Oberflächentopographie vorwiegend aus Tälerstrukturen erzeugt. Diese Oberflächentopographie ist bestimmt durch eine erhöhte Rauhigkeit der Oberfläche und einer definierten Orientierung. Beim Feindrehen auf einen bestimmten Durchmesser werden die Oberflächenrauigkeiten nicht vollständig abgetragen. Es verbleibt eine gewisse, in Umfangsrichtung ausgerichtete Restrauhigkeit, welche ein definiertes Ölreservoir darstellt.

Eine zusätzliche Möglichkeit ist gemäß einer Weiterbildung, dass die Gleitfläche und die Ausnehmungen nach dem Feindrehen durch einen Mikrofinishing-Prozess - wie zum Beispiel Keramfinishing bearbeitet werden. Dabei lässt sich das Maß der Restrauhigkeit und somit das Ölreservoir gezielt und reproduzierbar einstellen. Wichtig ist dabei die über die Oberfläche der Gleitfläche gleichmäßige Verteilung der Ölreservoirs.

Ferner bezieht sich die Erfindung auf eine Gleitfläche eines Lagers, die durch Lichtbogenspritzen auf eine Trägerfläche aufgebracht ist, wobei die Gleitfläche aus einer Fe-Basislegierung gebildet ist.

Hinsichtlich einer für den Druckaufbau vorteilhaften Rauhigkeitsverteilung ist erfindungsgemäß vorgesehen, dass die Gleitfläche im Bereich einer Oberfläche eine Tälerstruktur aufweist, die aus Ausnehmungen gebildet ist, wobei die Ausnehmungen eine Flussbehinderung bilden und mit Bezug zu einer Lagerachse eine Ausrichtung aufweisen, die maximal um 45° von der Umfangsrichtung abweicht. Die Tälerstruktur, beziehungsweise die Ausnehmungen verlaufen somit quer zur Laufrichtung des Gleitlagers und sind statistisch ausgerichtet. Dadurch wird der hydrodynamische Druckaufbau verbessert und der Reibwert reduziert.

Vorteilhaft ist es hierzu, dass die Ausnehmungen ein Ölhaltevolumen bilden, das pro cm² Oberfläche zwischen 0,01 und 2 mm³, im Besonderen zwischen 0,04 und 0,1 mm³ beträgt. Das quantitativ über die gesamte Gleitfläche gleichmäßig einstellbare Ölhaltevolumen bildet die Gleitschmierung und reduziert den Verschleiß der Laufpartner. Das Ölhaltevolumen wird bei einer Schmierfilmdicke mit dem Wert Null bestimmt. Bei der Bestimmung erfolgt jedoch keine Verformung der Rauhigkeitsspitzen. Erst das Ölhaltevolumen in Kombination mit der Ausrichtung beziehungsweise Orientierung der Ausnehmungen führt zu einer erhöhten Flussbehinderung.

Gemäß einer bevorzugten Ausführungsform der erfindungsgemäßen Lösung ist schließlich vorgesehen, dass das Maß der Flussbehinderung der Oberfläche einen durchschnittlichen Peklenit-Faktor kleiner als 1 aufweist, der die Orientierung der Ausnehmungen als Verhältnis von Korrelationslängen der Ausnehmungen in Laufrichtung zu senkrecht zur Laufrichtung angibt. Die Korrelationslängen sind die Längen in Laufrichtung und die Längen senkrecht zur Laufrichtung. Das Maß 1 beschreibt eine isotrope, das Maß < 1 eine transversale Ausrichtung der Ausnehmungen.

Von besonderer Bedeutung ist für die vorliegende Erfindung, dass die Gleitfläche aus einer molybdänfreien Fe-Basislegierung gebildet ist und/oder aus einer Fe-Basislegierung gebildet ist, die zwischen 0,8 und 0,9% Kohlenstoff aufweist. Weitere Legierungsbestandteile sind aufgrund der hohen Druckausbildung und der guten Schmiereigenschaften nicht erforderlich.

Im Zusammenhang mit der erfindungsgemäßen Ausbildung und Anordnung ist es von Vorteil, dass die Gleitfläche nach dem Aufspritzen und vor dem Feindrehen eine Rauhigkeit zwischen 0,1 und 0,5 mm aufweist. In Kombination mit einer definierten Orientierung hat sich dieses Maß an Rauhigkeit hinsichtlich der weiteren Bearbeitung als sehr vorteilhaft erwiesen. Beim Feindrehen wird das Maß der Oberflächenrauhigkeit nicht vollständig abgetragen.

Entsprechend ist es vorteilhaft, dass die Gleitfläche nach dem Aufspritzen und nach dem Feindrehen einen Rauhigkeitswert zwischen 0,01 und 0,03 mm aufweist. Der Rauhigkeitswert ist maßgebend für das Ölhaltevolumen. Durch das Feindrehen wird in Korrelation mit dem geforderten Lagerinnendurchmesser der Wert der Restrauhigkeit bestimmt.

Außerdem ist es vorteilhaft, dass die Gleitfläche als Laufbuchse für einen Kolben eines Verbrennungsmotors ausgebildet ist und die Trägerfläche eine Zylinderwand eines Zylindergehäuses bildet. Die Ausnehmungen erstrecken sich senkrecht zur Laufrichtung des Kolbens. Die entsprechende Flussbehinderung ist abhängig von der Ausrichtung und der Länge der Ausnehmungen. Lange und im Wesentlichen in Umfangsrichtung orientierte Ausnehmungen bilden eine sehr gute Flussbehinderung. In Kombination mit dem Ölhaltevolumen werden sehr gute Gleiteigenschaften erzeugt.

Eine weitere Möglichkeit der Verbesserung der tribologischen Eigenschaften der Laufbuchse wird durch eine sogenannte verschleppte Verbrennung erzeugt. Infolge eines kurzzeitig eingestellten speziellen Verbrennungsablaufs werden Verbrennungsreaktionsprodukte eingelagert. Diese bestehen in überwiegendem Maß aus Kohlenstoff und in geringem Umfang aus Additivresten. Der Kohlenstoff wirkt sich hierbei positiv auf die Fressneigung der Laufpartner aus, da er als Festschmierstoff wirkt. Dieses Verfahren erlaubt eine molybdänfreie Fe-Basislegierung als Gleitfläche.

Zur weiteren Steigerung der tribologischen Eigenschaften wird Si, Cr, Ni, Cu oder Mg als Legierungsbestandteil der Fe-Basislegierung hinzugefügt.

Weitere Vorteile und Einzelheiten der Erfindung sind in den Patentansprüchen und in der Beschreibung erläutert und in den Figuren dargestellt.

Dabei zeigen:
- Fig. 1: einen schematischen Querschnitt einer Gleitfläche nach dem Aufspritzen;
- Fig. 2: einen schematischen Querschnitt einer Gleitfläche nach dem Feindrehen;
- Fig. 3: eine schematische Darstellung des Aufbaus einer Gleitfläche.

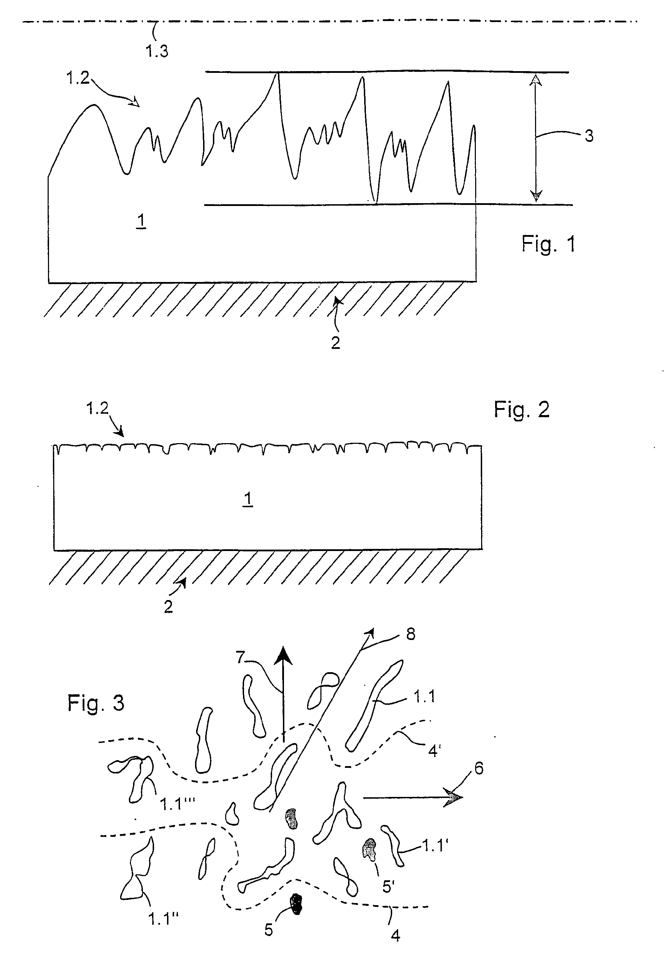

Gemäß Figur 1 ist die Gleitfläche 1 auf eine Trägerfläche 2 aufgespritzt. Die Trägerfläche 2 bildet einen Hohlzylinder mit einer Lagerachse 1.3. Das Maß der Rauhigkeit der Oberfläche 1.2 beträgt maximal 0,5 mm. Die Rauhigkeit ist definiert als Differenz zwischen dem größten und dem kleinsten Abstand der Oberfläche 1.2 zur Lagerachse 1.3. Das Verhältnis der absoluten Schichtdicke der Gleitfläche 1 zum Rauhigkeitsmaß 3 ist in dieser Darstellung nicht maßstabsgetreu.

Figur 2 zeigt die Gleitfläche 1 nach dem Feindrehen der Oberfläche 1.2. Durch das Feindrehen werden die Rauhigkeitsspitzen geglättet. Es verbleibt eine gewisse Restrauhigkeit, welche ein Ölreservoir darstellt. Die Figuren 1 und 2 sind zueinander nicht maßstabsgetreu.

Durch den Spritzprozess mittels eines in Umfangsrichtung 7 rotierenden Brenners und durch das Aufschmelzen aller Werkstoffpartikel wird auf der Oberfläche 1.2 eine Topographie gemäß Figur 3 erzeugt. Figur 3 zeigt eine als Laufbuchse für einen Kolben eines Verbrennungsmotors ausgebildete Gleitfläche 1. Die Laufrichtung 6 des Kolbens ist mit einem Pfeil gekennzeichnet.

Die Oberfläche 1.2 besteht überwiegend aus Ausnehmungen 1.1, 1.1', 1.1", 1.1"', die eine Tälerstruktur bilden. Die Ausrichtung 8 ist mittels der Prozessführung des Lichtbogenspritzverfahrens derart erfolgt, dass sich zusätzliche Flussbehinderungen 4, 4' in Kolbenlaufrichtung einstellen. Im Idealfall sind die Ausnehmungen 1.1 in Umfangsrichtung 7 ausgerichtet. Im vorliegenden Beispiel weicht die Ausrichtung 8 ca. um 35° von der Umfangsrichtung 7 ab.

Neben den Ausnehmungen 1.1 sind Feststoffschmierinseln 5, 5' in Form von Partikeln in die Gleitfläche 1 eingebracht, die eine Grundtragfähigkeit des tribologischen Systems bilden.

Die vorstehend beschriebene Orientierung der Oberflächenrauhigkeiten wirkt sich vorteilhaft auf die hydrodynamische Druckausbildung aus. Dadurch lässt sich die Tragfähigkeit des tribologischen Systems durch Erhöhung der Schmierfilmdicke auf der Gleitfläche 1 weiter erhöhen. Die Oberflächentopographie ist insgesamt so dargestellt, dass sich ein Peklenit-Faktor kleiner 1 einstellt.

### Bezugszeichenliste

- 1: Gleitfläche
- 1.1: Ausnehmung, Tälerstruktur
- 1.1': Ausnehmung, Tälerstruktur
- 1.1": Ausnehmung, Tälerstruktur
- 1.1"': Ausnehmung, Tälerstruktur
- 1.2: Oberfläche
- 1.3: Lagerachse
- 2: Trägerfläche
- 3: Rauhigkeitsmaß
- 4: Flussbehinderung
- 4': Flussbehinderung
- 5: Festschmierstoffinsel
- 5': Festschmierstoffinsel
- 6: Laufrichtung
- 7: Umfangsrichtung
- 8: Ausrichtung

## Patentansprüche

1. Verfahren zum Herstellen einer zylinderförmigen Gleitfläche (1) mit einer Lagerachse (1.3) durch Lichtbogenspritzen von Werkstoffpartikeln einer Fe-Basislegierung,
**dadurch gekennzeichnet,**
**dass** die Gleitfläche (1) durch ein rotierendes Spritzwerkzeug aufgebracht wird und die Gefügestruktur der Gleitfläche (1) mit Bezug zur Lagerachse (1.3) in Umfangsrichtung (7) oder maximal um 45° von der Umfangsrichtung (7) abweichend ausgerichtet wird.

2. Verfahren nach Anspruch 1,
**dadurch gekennzeichnet,**
**dass** zum Aufspritzen 95 bis 100% aller Werkstoffpartikel aufgeschmolzen sind und nach dem Aufspritzen Ausnehmungen (1.1) oder Tälerstrukturen in der Gleitfläche (1) und/oder auf der Oberfläche (1.2) durch Feindrehen erzeugt werden.

3. Verfahren nach Anspruch 1 oder 2,
**dadurch gekennzeichnet,**
**dass** die Gleitfläche (1) und die Ausnehmungen (1.1) nach dem Feindrehen durch einen Mikrofinishing-Prozess wie zum Beispiel Keramfinishing bearbeitet werden.

4. Gleitfläche (1) eines Lagers, die durch Lichtbogenspritzen auf eine Trägerfläche (2) aufgebracht ist, wobei die Gleitfläche (1) aus einer Fe-Basislegierung gebildet ist,
**dadurch gekennzeichnet,**
**dass** die Gleitfläche (1) im Bereich einer Oberfläche (1.2) eine Tälerstruktur aufweist, die aus Ausnehmungen (1.1) gebildet ist, wobei die Ausnehmungen (1.1) eine Flussbehinderung (4) bilden und mit Bezug zu einer Lagerachse (1.3) eine Ausrichtung (8) aufweisen, die maximal um 45° von der Umfangsrichtung (7) abweicht.

5. Gleitfläche (1) eines Lagers nach Anspruch 4,
**dadurch gekennzeichnet,**
**dass** die Ausnehmungen (1.1) ein Ölhaltevolumen bilden, das pro cm² Oberfläche (1.2) zwischen 0,01 und 2 mm³ beträgt.

6. Gleitfläche (1) eines Lagers nach Anspruch 4 oder 5
**dadurch gekennzeichnet,**
**dass** das Maß der Flussbehinderung (4) der Oberfläche (1.2) der Gleitfläche (1) einen durchschnittlichen Peklenit-Faktor kleiner als 1 aufweist.

7. Gleitfläche (1) eines Lagers nach einem der Ansprüche 4 bis 6,
**dadurch gekennzeichnet,**
**dass** die Gleitfläche (1) aus einer molybdänfreien Fe-Basislegierung gebildet ist und/oder aus einer Fe-Basislegierung gebildet ist, die zwischen 0,8 und 0,9% Kohlenstoff aufweist.

8. Gleitfläche (1) eines Lagers nach einem der Ansprüche 4 bis 7,
**dadurch gekennzeichnet,**
**dass** die Gleitfläche (1) nach dem Aufspritzen und vor dem Feindrehen eine Rauigkeit zwischen 0,1 und 0,5 mm aufweist.

9. Gleitfläche (1) eines Lagers nach einem der Ansprüche 4 bis 8,
**dadurch gekennzeichnet,**
**dass** die Gleitfläche (1) nach dem Aufspritzen und nach dem Feindrehen einen Rauigkeitswert zwischen 0,01 und 0,03 mm aufweist.

10. Gleitfläche (1) eines Lagers nach einem der Ansprüche 4 bis 9,
**dadurch gekennzeichnet,**
**dass** die Gleitfläche (1) als Laufbuchse für einen Kolben eines Verbrennungsmotors ausgebildet ist und die Trägerfläche (2) eine Zylinderwand eines Zylindergehäuses bildet.

## Claims

1. Method for producing a cylindrical sliding surface (1) with a bearing axis (1.3) by arc spraying of material particles of an Fe-based alloy, **characterized in that** the sliding surface (1) is applied by a rotating spraying tool, and the microstructure of the sliding surface (1) is oriented in the circumferential direction (7) or is oriented so as to deviate by at most 45° from the circumferential direction (7) with respect to the bearing axis (1.3).

2. Method as claimed in Claim 1, **characterized in that** for the spraying operation 95 to 100% of all the material particles are melted, and after the spraying operation recesses (1.1) or valley structures are produced in the sliding surface (1) and/or on the surface (1.2) by precision turning.

3. Method as claimed in Claim 1 or 2, **characterized in that** the sliding surface (1) and the recesses (1.1), after the precision-turning operation, are machined by a microfinishing process, such as, for example ceramfinishing.

4. Sliding surface (1) of a bearing, which has been applied by arc spraying to a support surface (2), the sliding surface (1) being formed from an Fe-based alloy, **characterized in that** the sliding surface (1), in the region of a surface (1.2), has a valley structure formed from recesses (1.1), the recesses (1.1) forming a flow obstacle (4) and having an orientation (8) with respect to a bearing axis (1.3) which deviates by at most 45° from the circumferential direction (7).

5. Sliding surface (1) of a bearing as claimed in Claim 4, **characterized in that** the recesses (1.1) form an oil-holding volume which amounts to between 0.01 and 2 mm³ per cm² of surface (1.2).

6. Sliding surface (1) of a bearing as claimed in Claim 4 or 5, **characterized in that** the extent of the flow obstacle (4) formed by the surface (1.2) of the sliding surface (1) has a mean Peklenit factor of less than 1.

7. Sliding surface (1) of a bearing as claimed in one of Claims 4 to 6, **characterized in that** the sliding surface (1) is formed from a molybdenum-free Fe-based alloy and/or is formed from an Fe-based alloy which contains between 0.8 and 0.9% of carbon.

8. Sliding surface (1) of a bearing as claimed in one of Claims 4 to 7, **characterized in that** the sliding surface (1) has a roughness of between 0.1 and 0.5 mm following the spraying operation and before the precision-turning operation.

9. Sliding surface (1) of a bearing as claimed in one of Claims 4 to 8, **characterized in that** the sliding surface (1) has a roughness value of between 0.01 and 0.03 mm following the spraying and precision-turning operations.

10. Sliding surface (1) of a bearing as claimed in one of Claims 4 to 9, **characterized in that** the sliding surface (1) is designed as a running sleeve for a piston of an internal combustion engine, and the support surface (2) forms a cylinder wall of a cylinder casing.

## Revendications

1. Procédé de production d'une surface de glissement cylindrique (1) avec un axe de palier (1.3) par projection à l'arc électrique de particules de matière d'un alliage à base de fer, **caractérisé en ce que** l'on dépose la surface de glissement (1) avec un outil de projection rotatif et on oriente la texture de la surface de glissement (1), par rapport à l'axe de palier (1.3), dans la direction périphérique (7) ou avec un écart maximal de 45° par rapport à la direction périphérique (7).

2. Procédé selon la revendication 1, **caractérisé en ce que** l'on fond 95 à 100 % de toutes les particules de matière pour la projection et, après la projection, on produit des évidements (1.1) ou des structures de vallées dans la surface de glissement (1) et/ou sur la surface (1.2) par tournage fin.

3. Procédé selon la revendication 1 ou 2, **caractérisé en ce que** l'on usine la surface de glissement (1) et les évidements (1.1), après le tournage fin, par un procédé de microfinition, comme par exemple une finition céramique.

4. Surface de glissement (1) d'un palier, qui est déposée par projection à l'arc électrique sur une surface de support (2), dans laquelle la surface de glissement (1) est formée d'un alliage à base de fer, **caractérisée en ce que** la surface de glissement (1) présente dans la zone de la surface (1.1) une structure de vallées, qui est formée par des évidements (1.1), dans laquelle les évidements (1.1) forment un obstacle à l'écoulement (4) et présentent, par rapport à un axe de palier (1.3), une orientation qui s'écarte au maximum de 45° de la direction périphérique (7).

5. Surface de glissement (1) d'un palier selon la revendication 4, **caractérisée en ce que** les évidements (1.1) forment un volume de rétention d'huile, qui vaut entre 0,1 et 2 mm³ par cm² de surface (1.2).

6. Surface de glissement (1) d'un palier selon la revendication 4 ou 5, **caractérisée en ce que** la mesure de l'obstacle à l'écoulement (4) de la surface (1.2) de la surface de glissement (1) présente un facteur Peklenit moyen inférieur à 1.

7. Surface de glissement (1) d'un palier selon l'une quelconque des revendications 4 à 6, **caractérisée en ce que** la surface de glissement (1) est formée d'un alliage à base de fer sans molybdène et/ou d'un alliage à base de fer, qui contient entre 0,8 et 0,9 % de carbone.

8. Surface de glissement (1) d'un palier selon l'une quelconque des revendications 4 à 7, **caractérisée en ce que** la surface de glissement (1) présente, après la projection et avant le tournage fin, une rugosité comprise entre 0,1 et 0,5 mm.

9. Surface de glissement (1) d'un palier selon l'une quelconque des revendications 4 à 8, **caractérisée en ce que** la surface de glissement (1) présente, après la projection et après le tournage fin, une valeur de rugosité comprise entre 0,01 et 0,03 mm.

10. Surface de glissement (1) d'un palier selon l'une quelconque des revendications 4 à 9, **caractérisée en ce que** la surface de glissement (1) est une boîte de glissement pour un piston d'un moteur à combustion interne et la surface de support (2) forme une paroi cylindrique d'un corps de cylindre.
